# EUROPEAN PATENT APPLICATION

(11) **EP 4 842 073 A1**
(43) Date of publication of application: **18.11.2026**
(21) Application number: 24917385.7
(22) Date of filing: 08.05.2024
(51) Int. Cl.: H04W 48/20, H04W 8/02, H04W 68/02, H04W 84/06

(54) **METHOD AND DEVICE FOR SELECTING BASE STATION ON BASIS OF TRACKING AREA INFORMATION IN WIRELESS COMMUNICATION SYSTEM**

(30) Priority: 12.01.2024 US 202463620182 P
(71) Applicant: LG Electronics Inc., Yeongdeungpo-gu Seoul 07336 (KR)
(72) Inventor: KIM, Jaewoo, Seoul 06772 (KR); YOUN, Myungjune, Seoul 06772 (KR); KIM, Laeyoung, Seoul 06772 (KR); KIM, Hyunsook, Seoul 06772 (KR)
(74) Representative: Plasseraud IP
(86) International application number: PCT/KR2024/006163
(87) International publication number: WO 2025/150624

(57) **Abstract**

The objective of the present disclosure is to select a base station on the basis of tracking area information in a wireless communication system. A method performed by a network node may comprise the steps of: receiving a configuration request message from at least one base station; transmitting a configuration response message to the at least one base station; detecting downlink data for a terminal; and transmitting a message for paging the terminal to a first base station among the at least one base station.

## Description

### TECHNICAL FIELD

The following description relates to a wireless communication system, and more specifically, to an apparatus and method for selecting a base station based on tracking area (TA) information in a wireless communication system.

### BACKGROUNDART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for selecting a base station based on tracking area (TA) information in a wireless communication system.

The present disclosure relates to an apparatus and method for performing paging based on information on a supported TA of a base station in a wireless communication system.

The present disclosure relates to an apparatus and method for selecting a base station for paging based on information on a supported TA of a base station in a wireless communication system.

The present disclosure relates to an apparatus and method for obtaining time validity information on a supported TA of a base station mounted on a satellite in a wireless communication system.

The present disclosure relates to an apparatus and method for updating a TA list of a base station mounted on a satellite in a wireless communication system.

The present disclosure relates to an apparatus and method for provisioning TA information to a base station or a network node in a wireless communication system.

The present disclosure relates to an apparatus and method for obtaining time validity information for each supported TA of a base station based on pre-provisioned TA information in a wireless communication system.

The present disclosure relates to an apparatus and method for selecting a base station for paging of a UE based on at least one of time validity information for each supported TA of a base station and connectivity information between base stations in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method performed by a network node in a wireless communication system may comprise, receiving a configuration request message from at least one base station, transmitting a configuration response message to the at least one base station, detecting downlink data for a user equipment, and transmitting a message for paging the user equipment to a first base station among the at least one base station, wherein the at least one base station may be mounted on at least one satellite, the first base station may be selected based on tracking area (TA) information of the at least one base station provisioned to the at least one base station or the network node, and the TA information of the at least one base station may comprise at least one of a TA supported by the at least one base station and information indicating a time validity of the TA.

As an example of the present disclosure, a method performed by a base station in a wireless communication system may comprise, transmitting a configuration request message to a network node, receiving a configuration response message from the network node, and receiving a message for paging a user equipment, wherein the base station may be mounted on a satellite, the base station may be selected as a base station for the paging based on TA information of at least one base station including the base station, provisioned to the at least one base station or the network node, and the TA information of the at least one base station may comprise at least one of a TA supported by the at least one base station and information indicating a time validity of the TA.

As an example of the present disclosure, a network node in a wireless communication system may comprise, a transceiver and a processor connected to the transceiver, wherein the processor may control the network node to receive a configuration request message from at least one base station, transmit a configuration response message to the at least one base station, detect downlink data for a user equipment, and transmit a message for paging the user equipment to a first base station among the at least one base station, wherein the at least one base station may be mounted on at least one satellite, the first base station may be selected based on TA information of the at least one base station provisioned to the at least one base station or the network node, and the TA information of the at least one base station may comprise at least one of a TA supported by the at least one base station and information indicating a time validity of the TA.

As an example of the present disclosure, a base station in a wireless communication system may comprise, a transceiver and a processor connected to the transceiver, wherein the processor may control the base station to transmit a configuration request message to a network node, receive a configuration response message from the network node, and receive a message for paging a user equipment, wherein the base station may be mounted on a satellite, the base station may be selected as a base station for the paging based on TA information of at least one base station including the base station, provisioned to the at least one base station or the network node, and the TA information of the at least one base station may comprise at least one of a TA supported by the at least one base station and information indicating a time validity of the TA.

As an example of the present disclosure, a communication apparatus may comprise, at least one processor and at least one computer memory connected to the at least one processor and storing instructions that, when executed by the at least one processor, direct operations, wherein the operations may comprise receiving a configuration request message from at least one base station, transmitting a configuration response message to the at least one base station, detecting downlink data for a user equipment, and transmitting a message for paging the user equipment to a first base station among the at least one base station, wherein the at least one base station may be mounted on at least one satellite, the first base station may be selected based on tracking area (TA) information of the at least one base station provisioned to the at least one base station or the network node, and the TA information of the at least one base station may comprise at least one of a TA supported by the at least one base station and information indicating a time validity of the TA.

As an example of the present disclosure, a non-transitory computer-readable medium storing at least one instruction may comprise the at least one instruction executable by a processor, wherein the at least one instruction may control an apparatus to receive a configuration request message from at least one base station, transmit a configuration response message to the at least one base station, detect downlink data for a user equipment, and transmit a message for paging the user equipment to a first base station among the at least one base station, wherein the at least one base station may be mounted on at least one satellite, the first base station may be selected based on TA information of the at least one base station provisioned to the at least one base station or the network node, and the TA information of the at least one base station may comprise at least one of a TA supported by the at least one base station and information indicating a time validity of the TA.

### ADVANTAGEOUS EFFECTS

The following effects may be achieved by embodiments based on the present disclosure.

The present disclosure can prevent resource consumption by minimizing unnecessary signaling for obtaining information on a supported TA of a base station mounted on a satellite in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5 illustrates an example of an NG setup procedure.
FIG. 6 illustrates an example of a conventional RAN configuration update procedure.
FIG. 7 illustrates an example of a supported TA list for each base station in a transparent satellite-based system.
FIG. 8 illustrates an example of a supported TA list for each base station in a regenerative satellite-based system.
FIG. 9 illustrates an example of a paging message transmission procedure according to an embodiment of the present disclosure.
FIG. 10 illustrates an example of a paging message reception procedure according to an embodiment of the present disclosure.
FIG. 11 illustrates an example of supported TAs of satellite base stations on a time basis according to an embodiment of the present disclosure.
FIG. 12 illustrates an example of an Xn setup procedure between satellite base stations according to an embodiment of the present disclosure.
FIG. 13 illustrates an example of a configuration update procedure of satellite base stations according to an embodiment of the present disclosure.
FIG. 14 illustrates an example of a detailed procedure for transmitting a paging message based on TA information according to an embodiment of the present disclosure.
FIG. 15 illustrates an example of a detailed procedure for receiving a paging message according to an embodiment of the present disclosure.
FIG. 16 illustrates an example of a paging procedure based on TA information according to an embodiment of the present disclosure.
FIG. 17 illustrates an example of sharing satellite connectivity information according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

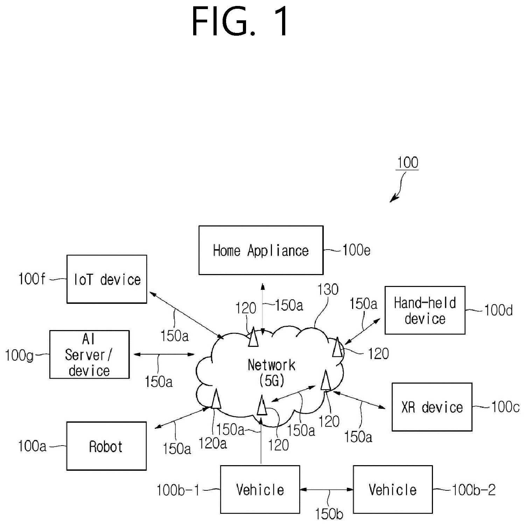

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

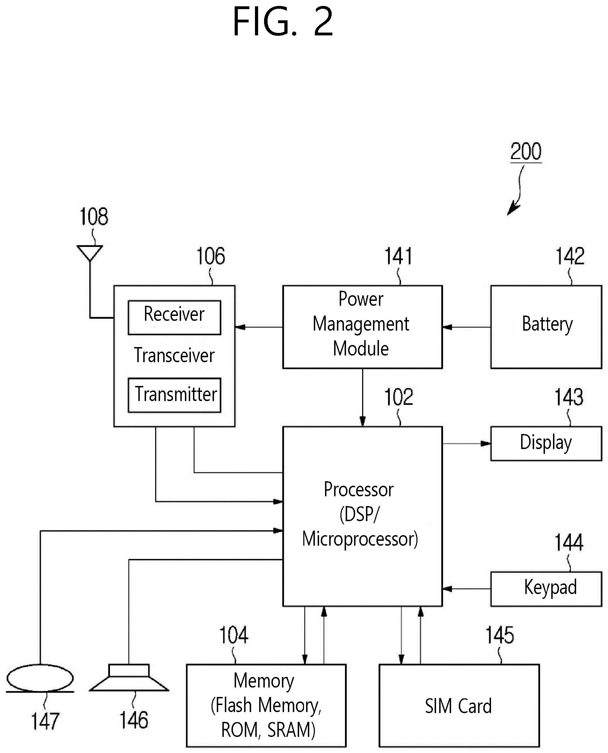

FIG. 2 illustrates an example of a UE applicable to the present disclosure.

Referring to FIG. 2, the UE 200 may include a processor 102, memory 104, transceiver 106, one or more antennas 108, power management module 141, battery 142, display 143, keypad 144, Subscriber Identification Module (SIM) card 145, speaker 146, and microphone 147.

The processor 102 may be configured to implement the descriptions, functions, procedures, proposals, methods and/or operational flowcharts disclosed herein. The processor 102 may be configured to control one or more other components of the UE 200 to implement the descriptions, functions, procedures, proposals, methods and/or operational flowcharts disclosed herein. Layers of wireless interface protocol may be implemented in the processor 102. The processor 102 may include ASIC, other chipset, logic circuit and/or data processing device. The processor 102 may be an application processor. The processor 102 may include at least one of DSP, Central Processing Unit (CPU), Graphics Processing Unit (GPU), and modem (modulator and demodulator).

The memory 104 is operably coupled with the processor 102 and may store various information for operating the processor 102. The memory 104 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 14 and executed by the processor 102. The memory 104 may be implemented within the processor 102 or external to the processor 102, in which case it may be communicatively coupled with the processor 102 through various methods known in the art.

The transceiver 106 is operably coupled with the processor 102 and may transmit and/or receive wireless signals. The transceiver 106 may include a transmitter and a receiver. The transceiver 106 may include baseband circuitry for processing radio frequency signals. The transceiver 106 may control one or more antennas 108 to transmit and/or receive wireless signals.

The power management module 141 may manage power for the processor 102 and/or transceiver 106. The battery 142 may supply power to the power management module 141.

The display 143 may output results processed by the processor 102. The keypad 144 may receive input for use by the processor 102. The keypad 144 may be displayed on the display 143.

The SIM card 145 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 146 may output sound-related results processed by the processor 102. The microphone 147 may receive sound-related input for use by the processor 102.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

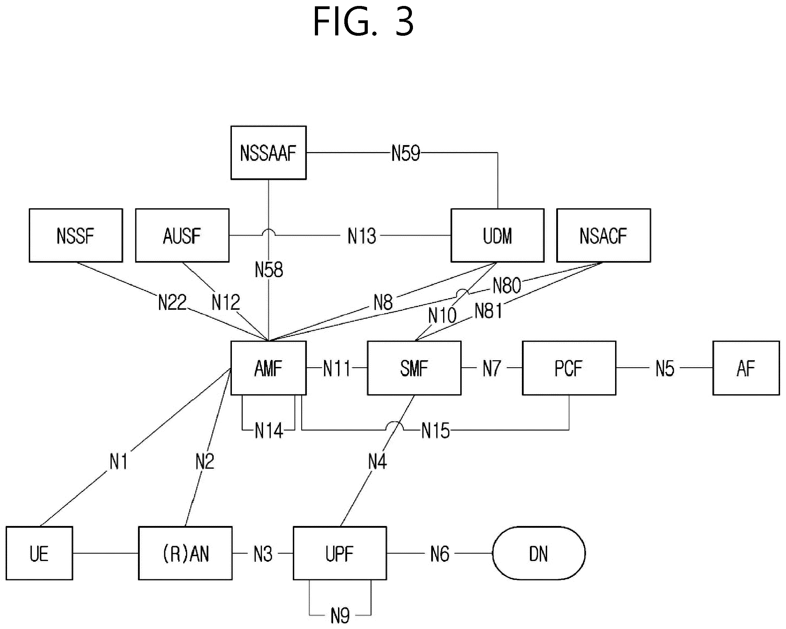

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

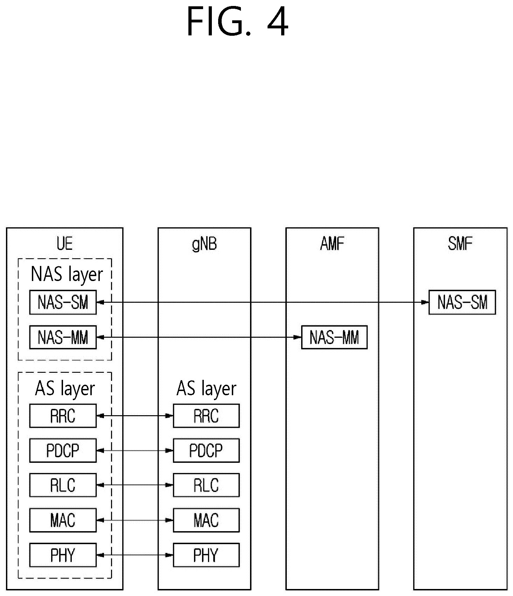

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

### Specific Embodiments of the Present Disclosure

The present disclosure relates to selecting a base station based on tracking area (TA) information in a wireless communication system. Specifically, the present disclosure relates to an apparatus and method for obtaining time validity information for each supported TA of at least one satellite base station based on TA information pre-provisioned to a base station or a network node, and selecting a base station for paging of a UE based on the time validity information for each supported TA. In the present disclosure, a satellite base station may include at least one of an NG-RAN node, a gNB, and an eNB mounted on a satellite.

Currently in 3GPP Release 19, research on supporting satellite communications is being conducted under the FS_5GSAT_ARCH_Ph3 (study on integration of satellite components in the 5G architecture Phase III) study item. Specifically, referring to TR 23.700-29, methods for supporting regenerative-based satellite access are being studied as shown in [Table 1].

**[Table 1]**

| | |
|---|---|
| **Key Issue #1: Support of Regenerative-based satellite access** | |
| **5.1.1 Description** | |
| The deployment of an eNB or an gNB on a satellite for regenerative based satellite access for LEO/MEO deployment is to be studied. The aspects to be studied include: | |
| | - Identify and study whether there is any impact on 5GS and EPS to support an gNB/eNB embedded on a satellite. |
| | - any impact of RAN nodes changing for any given 5GC/EPC and for a given area in the case of RAN nodes moving. |

As shown in [Table 1], solutions regarding the impact on 5GS/EPS to support regenerative-based satellite access in which an eNB and/or gNB is mounted on a satellite are scheduled to be discussed.

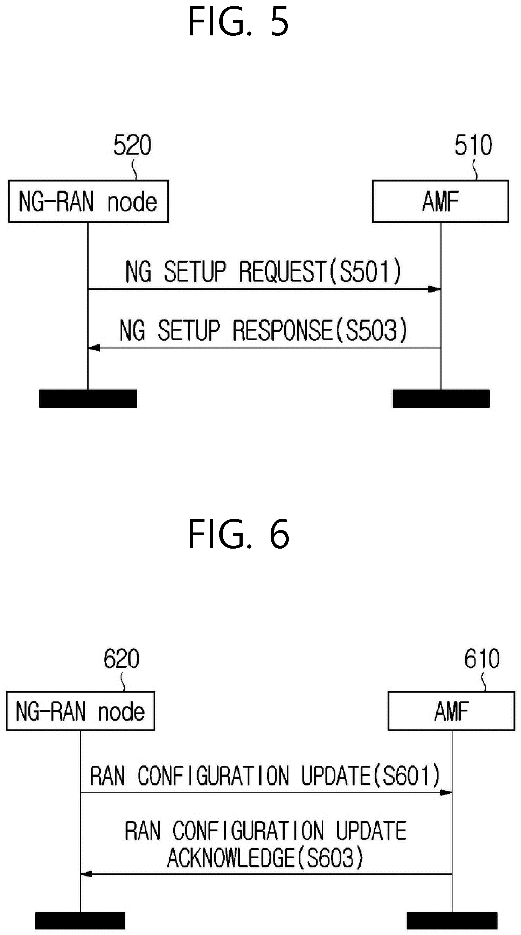

When an NG-RAN node (e.g., an eNB and/or gNB) first connects to an AMF, an NG setup procedure as illustrated in FIG. 5 is performed. The NG-RAN node and the AMF may perform the NG setup procedure to exchange application-level data required for interoperability over the NG-C interface. The NG setup procedure is the first Next Generation Application Protocol (NGAP) procedure triggered after a transport network layer (TNL) association is activated, and uses signaling not associated with a UE.

FIG. 5 illustrates an example of an NG setup procedure. Referring to FIG. 5, in step S501, an NG-RAN node 520 transmits an NG SETUP REQUEST message to an AMF 510, and in step S503, receives an NG SETUP RESPONSE message from the AMF 510. The NG-RAN node 520 may transmit application layer information for an NG-C interface instance using the NG SETUP REQUEST message. The NG SETUP REQUEST message is configured as shown in [Table 2].

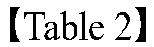

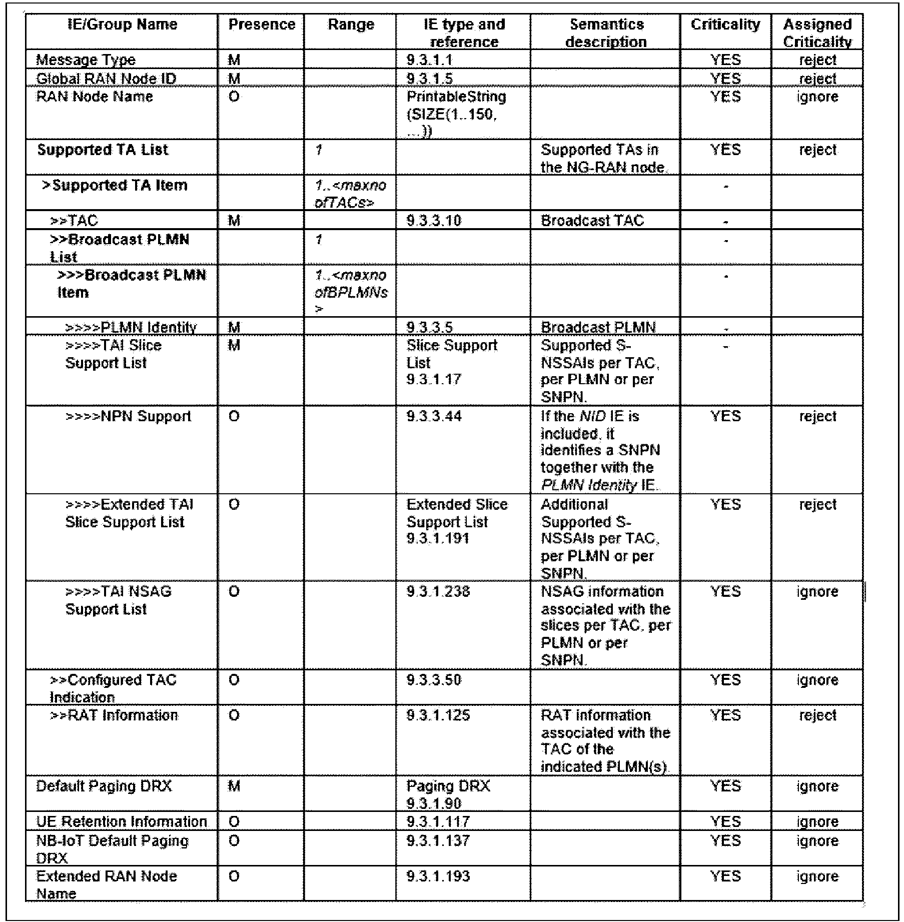

As shown in [Table 2], the NG SETUP REQUEST message includes a supported TA list comprising TACs corresponding to TAs supported by the NG-RAN node 520.

In addition, the supported TA list may be updated by a RAN configuration update procedure. The NG-RAN node and the AMF may perform the RAN configuration update procedure to exchange application-level configuration data required for interoperability over the NG-C interface. The RAN configuration update procedure does not affect the context associated with existing UEs, and uses signaling not associated with a UE.

FIG. 6 illustrates an example of a conventional RAN configuration update procedure. Referring to FIG. 6, in step S601, an NG-RAN node 620 transmits an NG CONFIGURATION UPDATE message to an AMF 610, and in step S603, receives an NG CONFIGURATION UPDATE ACKNOWLEDGE message from the AMF 610. The NG CONFIGURATION UPDATE message is configured as shown in [Table 3].

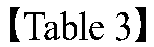

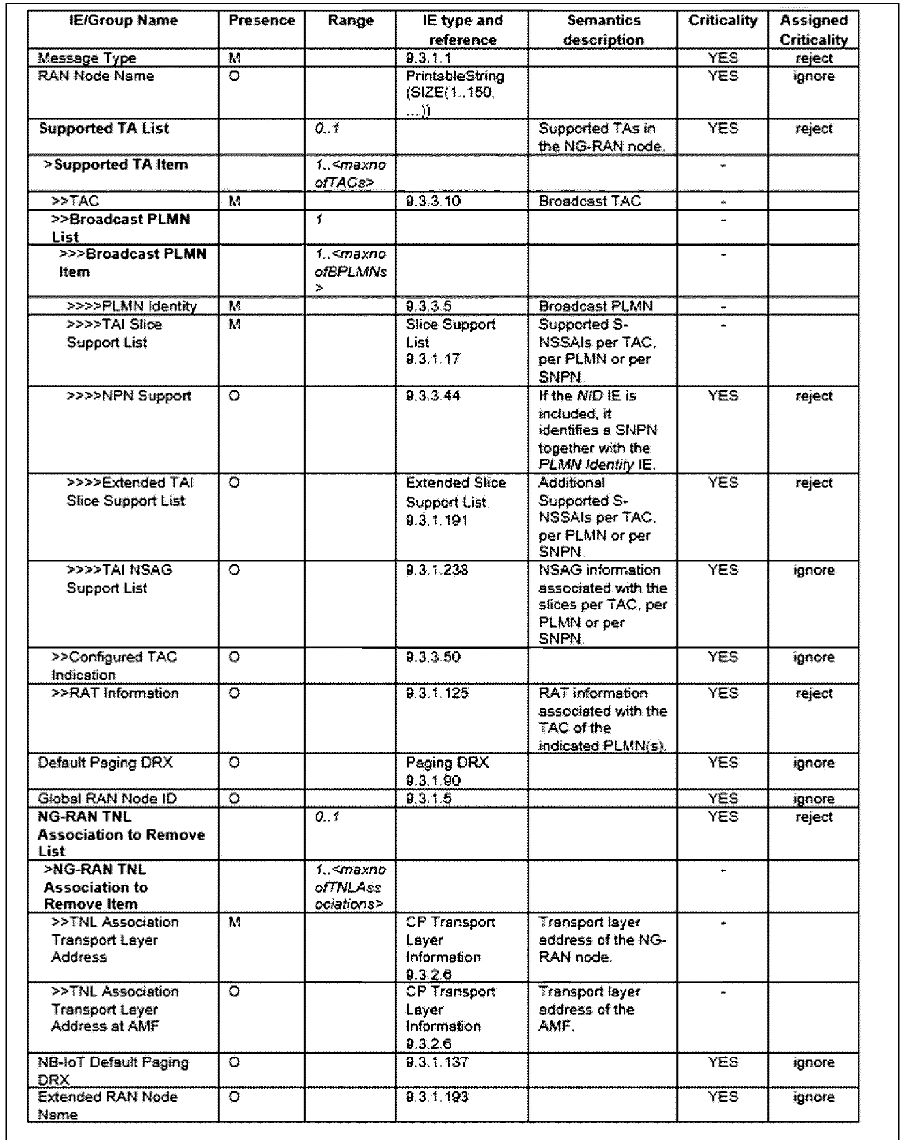

As shown in [Table 3], the NG CONFIGURATION UPDATE message includes a supported TA list comprising TACs corresponding to TAs supported by the NG-RAN node 620. When the NG CONFIGURATION UPDATE message includes the supported TA list, the AMF 610 may update the supported TA list for the NG-RAN node 620 and the supported slice list for each TA, and use the updated information for subsequent registration area management of a UE.

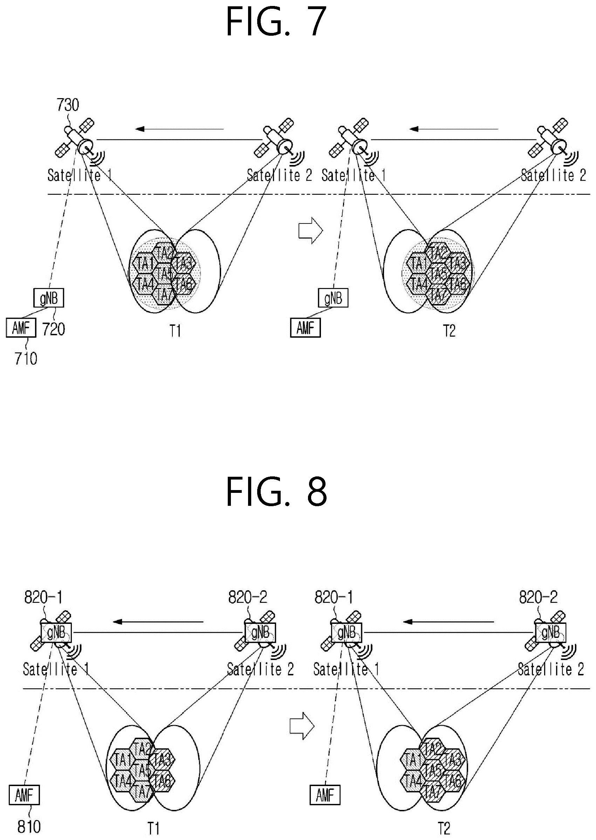

FIG. 7 illustrates an example of a supported TA list for each base station in a transparent satellite-based system. Referring to FIG. 7, in a transparent satellite-based system, the supported TAs of a gNB 720 are fixed. In other words, although the area covered by a satellite 730 changes in a transparent satellite-based system, the gNB 720 is fixed on the ground, so the supported TA list of the gNB 720 remains fixed unless the network configuration changes. Accordingly, when paging for a UE is required, the AMF 710 may request paging from the gNB 720 supporting the corresponding TA.

FIG. 8 illustrates an example of a supported TA list for each base station in a regenerative satellite-based system. Referring to FIG. 8, in a regenerative satellite-based system, gNBs 820-1 and 820-2 are mounted on satellites, so the supported TAs of the gNBs 820-1 and 820-2 may change as the satellites move. For example, a first satellite gNB 820-1 may support TA1, TA2, TA4, TA5, and TA7 at time T1, and may move to support TA1 and TA4 at time T2. In addition, a second satellite gNB 820-2 may support TA3 and TA6 at time T1, and may move to support TA2, TA3, TA5, TA6, and TA7 at time T2. In this case, when paging for a UE is required, the AMF 810 needs to identify the gNB supporting the corresponding TA among the gNBs 820-1 and 820-2, and request paging from the identified gNB.

As described above, the supported TA list of a satellite gNB changes as the satellite gNB moves. Accordingly, for accurate paging, the updated supported TA list of each satellite gNB needs to be delivered to the AMF each time the supported TA of the satellite gNB changes. However, if the supported TA list is delivered each time the supported TA of each satellite gNB changes, a significant amount of signaling is required between the satellite gNBs and the AMF. To minimize signaling, there is a method of transmitting the supported TA list of all satellite gNBs to the AMF at once, but when such a method is used, the problem of not being able to clearly indicate the TA that changes as the satellite gNB moves still remains.

Meanwhile, a satellite base station moves along a fixed orbit. Accordingly, the time-based TA area supported by a satellite base station may be determined based on the orbit of the satellite base station. However, a network node can only confirm information on the area covered by a satellite based on the satellite coverage availability information proposed in Release 18, and does not know which satellite covers each area.

Accordingly, the present disclosure proposes a technique for obtaining time validity information for each supported TA of satellite base stations that changes as the satellite base stations move, based on TA information provisioned to a satellite base station or a network node using O&M, and selecting a base station for paging based on the obtained time validity information for each supported TA of the satellite base stations.

Hereinafter, for convenience of explanation, the present disclosure uses components and interfaces of a 5G system (5GS) as examples, but the same may be applied to an evolved packet system (EPS) as well. For example, the network node of the present disclosure includes an AMF or an MME, and the satellite base station includes an NG-RAN node, a gNB, or an eNB mounted on a satellite. In addition, the interface between satellite base stations includes an Xn interface or an S1 interface, and a configuration update for a network node refers to an NG-RAN node configuration update or an eNB configuration update. In addition, in the present disclosure, the interface between satellite base stations may be implemented through an inter satellite link (ISL). Furthermore, satellite base stations may be connected in a multi-hop manner through one or more ISLs and one or more other satellite base stations. Accordingly, satellite base stations connected via ISL include both satellite base stations connected through a single ISL and satellite base stations connected in a multi-hop manner through multiple ISLs and one or more satellite base stations. The satellite of the present disclosure includes a low earth orbit (LEO) satellite or a medium earth orbit (MEO) satellite.

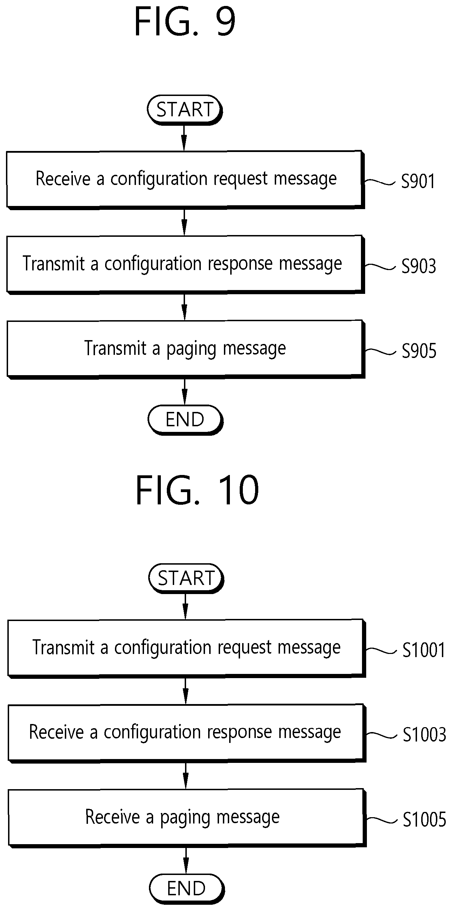

FIG. 9 illustrates an example of a paging message transmission procedure according to an embodiment of the present disclosure. FIG. 9 illustrates a method performed by a network node. The network node may be an AMF or an MME.

Referring to FIG. 9, in step S901, the network node receives a configuration request message. In other words, the network node receives a setup request message from a satellite base station. The configuration request message may be a message for exchanging application-level data required for interoperability over the interface between the network node and the satellite base station. For example, the configuration request message may be an NG SETUP REQUEST message. When TA information is provisioned to the satellite base station, the configuration request message may include a supported TA list of at least one satellite base station. In this case, the supported TA list of the at least one satellite base station may include TA information of the at least one satellite base station provisioned to the satellite base station. The TA information of the at least one satellite base station may include at least one of a supported TA of the at least one satellite base station and time validity information for each supported TA of the at least one satellite base station. The time validity information for each supported TA is information indicating a time validity for a tracking area code (TAC) of each supported TA, and indicates at least a partial time interval within a preconfigured time interval during which the corresponding supported TA is supported by the corresponding satellite base station. When TA information is provisioned to the network node, the configuration request message may not include the supported TA list of the at least one satellite base station.

In step S903, the network node transmits a configuration response message. In other words, the network node transmits a configuration response message to the satellite base station as a response to the configuration request message.

In step S905, the network node transmits a paging message. In other words, the network node detects downlink data for a UE, and transmits a message for paging the UE to a specific satellite base station. To this end, the network node may identify the TA for which paging is to be performed for the downlink data, and select the satellite base station supporting the identified TA as a base station for paging. In this case, the satellite base station supporting the identified TA may be identified based on TA information of at least one satellite base station provisioned to the network node or the satellite base station. When TA information is provisioned to the satellite base station, the network node may obtain updated TA information of the at least one satellite base station through a configuration update procedure.

FIG. 10 illustrates an example of a paging message reception procedure according to an embodiment of the present disclosure. FIG. 10 illustrates a method performed by a satellite base station. The satellite base station may be an NG-RAN node, a gNB, or an eNB mounted on a satellite.

Referring to FIG. 10, in step S1001, the satellite base station transmits a configuration request message. In other words, the satellite base station transmits a setup request message to the network node. The configuration request message may be a message for exchanging application-level data required for interoperability over the interface between the satellite base station and the network node. For example, the configuration request message may be an NG SETUP REQUEST message. When TA information is provisioned to the satellite base station, the configuration request message may include a supported TA list of at least one satellite base station. In this case, the supported TA list of the at least one satellite base station may include TA information of the at least one satellite base station provisioned to the satellite base station. The TA information of the at least one satellite base station may include at least one of a supported TA of the at least one satellite base station and time validity information for each supported TA of the at least one satellite base station. The time validity information for each supported TA is information indicating a time validity for a tracking area code (TAC) of each supported TA, and indicates at least a partial time interval within a preconfigured time interval during which the corresponding supported TA is supported by the corresponding satellite base station. When TA information is provisioned to the network node, the configuration request message may not include the supported TA list of the at least one satellite base station.

In step S1003, the satellite base station receives a configuration response message. In other words, the satellite base station receives a configuration response message from the network node as a response to the configuration request message.

In step S1005, the satellite base station receives a paging message. In other words, the satellite base station receives a paging message for a TA supported by the satellite base station from the network node. Upon receiving the paging message, the satellite base station may perform paging on a UE within a cell belonging to the corresponding TA. The satellite base station may be selected as a base station for paging the UE based on TA information provisioned to the network node or the satellite base station. When TA information is provisioned to the satellite base station, the satellite base station may transmit updated TA information of the at least one satellite base station to the network node through a configuration update procedure.

As described with reference to FIG. 9 and FIG. 10, TA information may be provisioned to a satellite base station or a network node. The signaling transmitted and received between the satellite base station and the network node and/or the information transmitted and received may differ depending on which entity, the satellite base station or the network node, the TA information is provisioned to.

### Method of provisioning TA information to a satellite base station

TA information may be provisioned to a satellite base station. In other words, the orbit and coverage information of a satellite is provisioned to a base station mounted on the satellite using operation and maintenance (O&M), and the TA information of at least one satellite base station is determined based on the orbit and coverage information of the corresponding satellite. The satellite base station provides the network node with a supported TA list including time validity information for each supported TA of the satellite base station, based on the provisioned TA information. The supported TA list is provided using an NG SETUP REQUEST message or a RAN CONFIGURATION UPDATE message. For example, the NG SETUP REQUEST message or the RAN CONFIGURATION UPDATE message may include a supported TA list including time validity information for each supported TA of the satellite base station. In this case, the time validity information may be expressed in various forms or formats. For example, the time validity information may be expressed in a coordinated universal time (UTC) format, a format having a timestamp value and a duration from the timestamp value, or a format indicating periodicity.

According to an embodiment, TA information indicating the TA covered or supported by the corresponding satellite base station on a time basis may be provisioned to each satellite base station. In this case, each satellite base station exchanges and stores information on the TA covered on a time basis, i.e., time validity information for each supported TA, with a neighboring base station via ISL.

Each satellite base station may be directly connected to the network node through a terrestrial gateway. In this case, each satellite base station may deliver to the network node the TA information of the corresponding satellite base station and the TA information of a neighboring satellite base station for a preconfigured time interval through the NG setup procedure. The network node stores the TA information of the corresponding satellite base station and the TA information of the neighboring satellite base station received from the directly connected satellite base station.

When an update to the TA information provided to the network node is required, each satellite base station may deliver to the network node the TA information of the corresponding satellite base station and the TA information of a neighboring satellite base station for a subsequent certain time interval through a configuration update procedure. In this case, the network node may update the TA information by deleting the previously stored TA information and storing the TA information received through the configuration update procedure.

In addition, when downlink data for a UE occurs, the network node may attempt paging by selecting a satellite base station that currently supports the TA requiring paging, based on the TA information of each satellite base station and the connectivity information of the satellite base stations, and transmitting a paging message to the selected satellite base station. In this case, the satellite base station receiving the paging message checks whether the TA requiring paging is within the area served by the satellite base station itself or is an area served by a neighboring satellite base station connected via ISL. If the TA requiring paging is within the area served by the satellite base station itself, the satellite base station performs paging based on the paging assistance information provided by the network node. On the other hand, if the TA requiring paging is an area served by a neighboring satellite base station connected via ISL, the satellite base station forwards the paging message to the corresponding neighboring satellite base station.

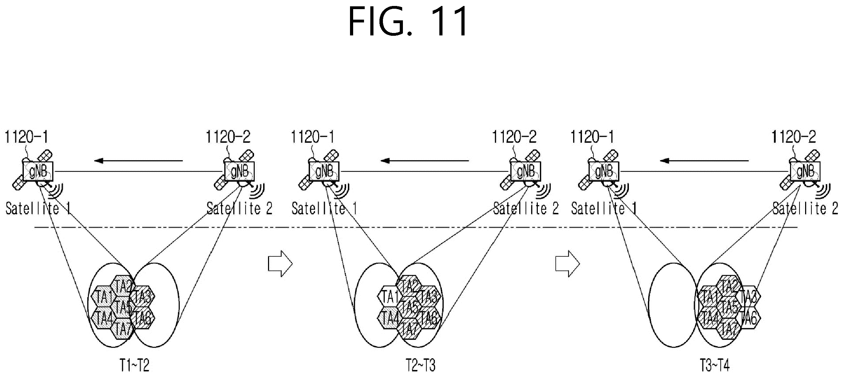

FIG. 11 illustrates an example of supported TAs of satellite base stations on a time basis according to an embodiment of the present disclosure.

Referring to FIG. 11, in a regenerative satellite-based system, the supported TA of each satellite base station 1120-1 and 1120-2 may vary on a time basis due to the movement of the corresponding satellite. Specifically, a first satellite base station 1120-1 supports TA1, TA2, TA4, TA5, and TA7 during the time interval corresponding to T1 to T2, supports TA1 and TA4 during the time interval corresponding to T2 to T3, and does not support TA1 through TA8 during the time interval corresponding to T3 to T4. In addition, a second satellite base station 1120-2 supports TA3 and TA6 during the time interval corresponding to T1 to T2, supports TA2, TA3, TA5, TA6, and TA7 during the time interval corresponding to T2 to T3, and supports TA1, TA2, TA4, TA5, and TA7 during the time interval corresponding to T3 to T4.

Accordingly, the supported TA list of each of the first satellite base station 1120-1 and the second satellite base station 1120-2 may be configured as follows.
- Supported TA list of first satellite base station 1120-1: TA2 (T1-T2), TA5 (T1-T2), TA1 (T1-T3), TA4 (T1-T3), TA7 (T1-T2)
- Supported TA list of second satellite base station 1120-2: TA3 (T1-T3), TA6 (T1-T3), TA2 (T2-T4), TA5 (T2-T4), TA7 (T2-T4), TA1 (T3-T4), TA4 (T3-T4)

As described above, TA3 and TA6 may be covered by the second satellite base station 1120-2 during a partial time interval corresponding to T1 to T2 and a partial time interval corresponding to T2 to T3, among the preconfigured time interval of T1 to T4. Accordingly, when the supported TA list of the second satellite base station 1120-2 includes information indicating that TA3 and TA6 are valid during the time interval corresponding to T1 to T3, i.e., time validity information for TA3 and TA6, the network node can determine that TA3 and TA6 are not covered by the second satellite base station 1120-2 after time T3. Accordingly, the network node may control paging for TA3 or TA6 occurring after time T3 not to be forwarded to the second satellite base station 1120-2.

Satellite base stations may share time validity information for each supported TA via ISL. In this case, the time validity information for each supported TA of each satellite base station is shared using a procedure for exchanging configuration data required for the interface between satellite base stations (e.g., an Xn setup procedure).

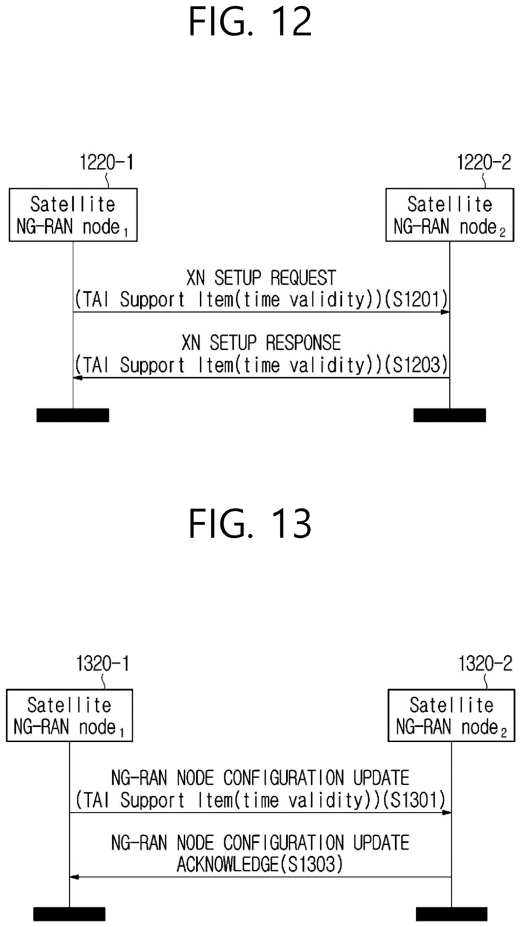

FIG. 12 illustrates an example of an Xn setup procedure between satellite base stations according to an embodiment of the present disclosure.

Referring to FIG. 12, in step S1201, a first satellite base station (satellite NG-RAN node₁) 1220-1 transmits an XN SETUP REQUEST message to a second satellite base station (satellite NG-RAN node₂) 1220-2. The XN SETUP REQUEST message includes TA information of the first satellite base station 1220-1. The TA information of the first satellite base station 1220-1 includes a supported TA list comprising at least one tracking area identity (TAI) corresponding to at least one TA supported by the first satellite base station 1220-1 and time validity information of the at least one TA. The time validity information of the at least one TA indicates at least a partial time interval within a preconfigured time interval during which the at least one TA is supported by the corresponding satellite base station.

In step S1203, the second satellite base station 1220-2 transmits an XN SETUP RESPONSE message to the first satellite base station 1220-1. The XN SETUP RESPONSE message includes TA information of the second satellite base station 1220-2. The TA information of the second satellite base station 1220-2 includes a supported TA list comprising at least one TAI corresponding to at least one TA supported by the second satellite base station 1220-2 and time validity information of the at least one TA.

As described with reference to FIG. 12, each of the XN SETUP REQUEST message and the XN SETUP RESPONSE message may include time validity information of at least one TA as a new IE.

In addition, as described with reference to FIG. 12, each of the XN SETUP REQUEST message and the XN SETUP RESPONSE message includes TA information of a satellite base station for a preconfigured time interval. Accordingly, when the preconfigured time interval has elapsed, satellite base stations may share TA information of the satellite base station for a time interval after the preconfigured time interval using a procedure for updating the configuration of a base station.

FIG. 13 illustrates an example of a configuration update procedure of satellite base stations according to an embodiment of the present disclosure.

Referring to FIG. 13, in step S1301, a first satellite base station (satellite NG-RAN node₁) 1320-1 transmits an NG-RAN NODE CONFIGURATION UPDATE message to a second satellite base station (satellite NG-RAN node₂) 1320-2. The NG-RAN NODE CONFIGURATION UPDATE message includes TA information of the first satellite base station 1320-1. In this case, the time validity information of at least one TA included in the TA information of the first satellite base station 1320-1 indicates at least a partial time interval within another time interval after the preconfigured time interval during which the at least one TA is supported by the first satellite base station 1320-1.

In step S1303, the second satellite base station 1320-2 transmits an NG-RAN NODE CONFIGURATION UPDATE ACKNOWLEDGE message to the first satellite base station 1320-1. The second satellite base station 1320-2 may obtain and store the TA information of the first satellite base station 1320-1 for another time interval after the preconfigured time interval based on the NG-RAN NODE CONFIGURATION UPDATE message, and then transmit an acknowledgment message for the NG-RAN NODE CONFIGURATION UPDATE message to the first satellite base station 1320-1.

As described with reference to FIG. 13, the NG-RAN NODE CONFIGURATION UPDATE message may include time validity information of at least one TA as a new IE.

In the description with reference to FIG. 12 and FIG. 13, satellite base stations shared the TA information of each satellite base station through the setup procedure and/or the base station configuration update procedure. According to an embodiment, satellite base stations may share additional information through the setup procedure and/or the base station configuration update procedure. For example, each satellite base station may further share, with another neighboring satellite base station, at least one of information on the network node to which the satellite base station is connected, and time information during which the satellite base station is directly connectable to the network node, using the setup procedure and/or the base station configuration update procedure. Here, the time information during which the satellite base station is directly connectable to the network node indicates the time during which the corresponding satellite base station is directly connected to the network node through a terrestrial gateway without going through a neighboring satellite base station connected via ISL. The information shared in this manner may be transmitted to the network node and used by the network node to select a satellite base station for paging.

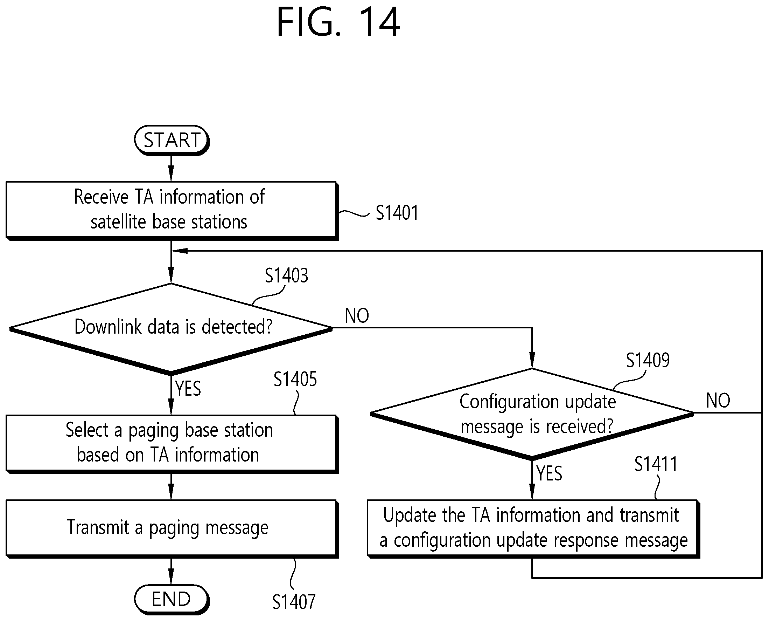

FIG. 14 illustrates an example of a detailed procedure for transmitting a paging message based on TA information according to an embodiment of the present disclosure. FIG. 14 illustrates a method performed by a network node. The network node may be an AMF or an MME.

Referring to FIG. 14, in step S1401, the network node receives TA information of satellite base stations. In other words, the network node receives a configuration request message including TA information of a satellite base station from the satellite base station, and stores the received TA information of the satellite base station. In this case, when the satellite base station is connected to at least one neighboring satellite base station, the configuration request message may further include TA information of the at least one neighboring satellite base station connected to the satellite base station. When no neighboring satellite base station is connected to the satellite base station for a certain period of time, the configuration request message may not include TA information of a neighboring satellite base station. Here, the configuration request message may be an NG SETUP REQUEST message. In addition, the at least one neighboring satellite base station includes a satellite base station connected via ISL to the satellite base station that transmitted the configuration request message to the network node. The TA information of the at least one neighboring satellite base station included in the NG SETUP REQUEST message may be information obtained by the satellite base station through the Xn setup procedure and/or the base station configuration update procedure as described with reference to FIG. 12 and/or FIG. 13.

According to an embodiment, the NG SETUP REQUEST message may further include at least one of: whether and when an ISL with a neighboring satellite base station is used; identification information (e.g., global gNB-ID) of a neighboring satellite base station connected to the satellite base station; time information during which the satellite base station and the neighboring satellite base station are connectable via ISL; information on the network node to which the neighboring satellite base station is connected; time information during which the neighboring satellite base station is directly connectable to the network node; and time validity information for TAs supported by the neighboring satellite base station during the time when the neighboring satellite base station is not directly connected to the network node. This is to enable the network node to determine at least one of the connectivity relationship between satellite base stations via ISL and ISL usage time information of the satellite base stations.

In step S1403, the network node checks whether downlink data is detected. In other words, the network node checks whether downlink data to be transmitted to a UE has occurred.

When downlink data is detected, in step S1405, the network node selects a paging base station based on TA information. When downlink data to be transmitted to a UE occurs, the network node identifies the TA where the UE is located, and selects a satellite base station that currently supports the TA where the UE is located as a satellite base station for paging, based on the TA information of the satellite base stations. In this case, at least one other piece of information included in the NG SETUP REQUEST message may be further used to select a satellite base station for paging. For example, the network node selects a satellite base station that currently supports the TA where the UE is located, based on at least one of: TA information of the satellite base station; TA information of at least one neighboring satellite base station; whether an ISL with a neighboring satellite base station is used; identification information (e.g., global gNB-ID) of a neighboring satellite base station connected to the satellite base station; time information during which the satellite base station and the neighboring satellite base station are connectable via ISL; information on the network node to which the neighboring satellite base station is connected; time information during which the neighboring satellite base station is directly connectable to the network node; and time validity information for TAs supported by the neighboring satellite base station during the time when the neighboring satellite base station is not directly connected to the network node. In this case, the selected satellite base station may be a satellite base station directly connected to the network node, or a neighboring satellite base station connected via ISL to a satellite base station directly connected to the network node. The network node may determine whether an ISL is required for transmitting the paging message based on whether the selected satellite base station is directly connected to the network node.

In step S1407, the network node transmits a paging message. In other words, the network node transmits a paging message to the selected satellite base station. If the selected satellite base station is a base station directly connected to the network node, the network node may transmit the paging message to the selected satellite base station. On the other hand, if the selected satellite base station is a neighboring satellite base station connected via ISL to a satellite base station directly connected to the network node, the network node may determine that ISL usage is required, and may transmit the paging message to the satellite base station directly connected to the network node while requesting the satellite base station to forward the paging message to the neighboring satellite base station connected via ISL. According to an embodiment, the paging message may include the TAI of the TA requiring paging, i.e., the TA where the corresponding UE is located. Alternatively, the network node may transmit information indicating the TA where the UE is located and the paging message to the satellite base station directly connected to the network node, without directly determining whether an ISL is required. In this case, the satellite base station receiving the paging message from the network node may determine that the TA where the UE is located is a TA served by a neighboring satellite base station connected via ISL, and may forward the paging message to the neighboring satellite base station.

When downlink data is not detected, in step S1409, the network node checks whether a configuration update message is received. In other words, the network node checks whether a configuration update message including TA information of a satellite base station and TA information of at least one neighboring satellite base station is received. The configuration update message may be a RAN CONFIGURATION UPDATE message including TA information of a satellite base station and TA information of at least one neighboring satellite base station for a time interval after the preconfigured time. According to an embodiment, the configuration update message may be received when an update to the TA information of the satellite base station and the TA information of the at least one neighboring satellite base station is required. For example, the configuration update message may be received from a satellite base station when a preconfigured time has elapsed, when a new TA is added to the satellite base station via O&M, when the satellite base station is connected via ISL to a new neighboring satellite base station, or when the ISL connection between the satellite base station and a neighboring satellite base station is released.

When the configuration update message is received, in step S1411, the network node updates the TA information and transmits a configuration update response message. The network node obtains and stores the TA information of the satellite base station and the TA information of the at least one satellite base station from the configuration update message, and transmits a configuration response message, which is a response to the configuration update message, to the satellite base station. In this case, the previously stored TA information of the satellite base station and the TA information of the at least one satellite base station may be deleted, and the TA information of the satellite base station and the TA information of the at least one satellite base station obtained from the configuration update message may be stored.

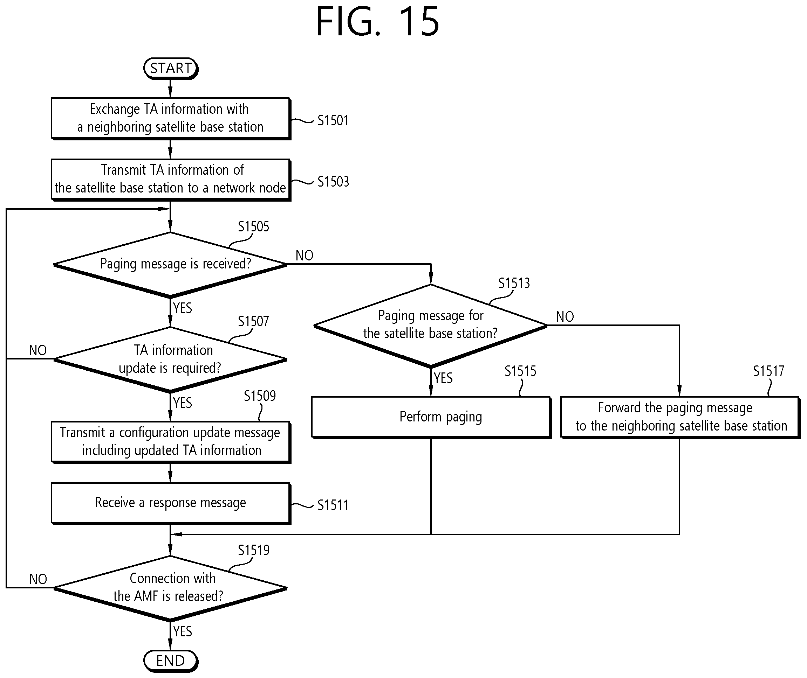

FIG. 15 illustrates an example of a detailed procedure for receiving a paging message according to an embodiment of the present disclosure. FIG. 15 illustrates a method performed by a satellite base station. The satellite base station may be an NG-RAN node, a gNB, or an eNB mounted on a satellite.

Referring to FIG. 15, in step S1501, the satellite base station exchanges TA information with a neighboring satellite base station. That is, the satellite base station transmits TA information of the satellite base station to the neighboring satellite base station, and receives TA information of the neighboring satellite base station from the neighboring satellite base station. For example, the satellite base station may exchange and share TA information with the neighboring base station using the Xn setup procedure and/or the base station configuration update procedure as described with reference to FIG. 12 and/or FIG. 13. According to an embodiment, there may be no neighboring base station connected to or connectable to the satellite base station for a certain period of time, in which case step S1501 may be omitted.

In step S1503, the satellite base station transmits TA information of the satellite base station to the network node. In other words, the satellite base station transmits a configuration request message including TA information of the corresponding satellite base station to the network node. When TA information of a neighboring satellite base station is obtained through step S1501, the configuration request message may further include the TA information of the neighboring satellite base station obtained through step S1501. Here, the configuration request message may be an NG SETUP REQUEST message.

In step S1505, the satellite base station checks whether a paging message is received. In other words, the satellite base station checks whether a paging message indicating that downlink data to be transmitted to a UE exists is received from the network node.

When a paging message is not received, in step S1507, the satellite base station determines whether TA information update is required. The satellite base station determines that TA information update is required when a TA information update trigger event occurs. The TA information update trigger event may include at least one of: an event in which a preconfigured time has elapsed; an event in which a new TA is added to the satellite base station via O&M; an event in which the satellite base station is connected via ISL to a new neighboring satellite base station; or an event in which the ISL connection between the satellite base station and a neighboring satellite base station is released.

When TA information update is required, in step S1509, the satellite base station transmits a configuration update message including updated TA information. The satellite base station updates at least one of the TA information of the satellite base station and the TA information of a neighboring satellite base station, and transmits a configuration update message including the updated TA information to the network node. Here, the TA information may be updated based on the occurred TA information update trigger event. For example, when the occurred TA information update trigger event is an event in which a preconfigured time has elapsed, at least one of the TA information of the satellite base station and the TA information of the neighboring satellite base station may be updated to TA information for a time interval after the preconfigured time interval. Alternatively, when the occurred TA information update trigger event is an event in which a new TA is added to the satellite base station via O&M, the TA information of the satellite base station may be updated to include the TAI and time validity information of the new TA. Alternatively, when the occurred TA information update trigger event is an event in which the satellite base station is connected via ISL to a new neighboring satellite base station, the TA information of the at least one neighboring satellite base station may be updated to include the TA information of the new neighboring satellite base station. Alternatively, when the occurred TA information update trigger event is an event in which the ISL connection between the satellite base station and a neighboring satellite base station is released, the TA information of the released neighboring satellite base station may be removed from the TA information of the at least one neighboring satellite base station.

In step S1511, the satellite base station receives a response message. In other words, the satellite base station receives a response message to the configuration update message from the network node.

In step S1519, the satellite base station checks whether the connection with the network node is released. When the connection with the network node is not released, the satellite base station may re-perform step S1505.

Meanwhile, when a paging message is received as a result of the check in step S1505, in step S1513, the satellite base station checks whether the received paging message is a paging message for the satellite base station. The satellite base station may check whether the received paging message is a paging message for the satellite base station based on the TAI included in the paging message. In other words, the satellite base station may check, based on the TAI included in the paging message, whether the corresponding TA is a TA currently supported by the satellite base station or a TA supported by a neighboring satellite base station. When the corresponding TA is a TA currently supported by the satellite base station, the satellite base station may determine the received paging message to be a paging message for the satellite base station. When the corresponding TA is a TA currently supported by a neighboring satellite base station, the satellite base station may determine the received paging message to be a paging message for the neighboring satellite base station.

When the paging message is for the satellite base station, in step S1515, the satellite base station performs paging. When the corresponding TA is a TA currently supported by the satellite base station, the satellite base station may perform paging based on the paging assistance information provided by the network node through the paging message.

When the paging message is not for the satellite base station, in step S1517, the satellite base station forwards the paging message to the neighboring satellite base station. When the corresponding TA is a TA currently supported by a neighboring satellite base station, the satellite base station may forward the paging message to the neighboring satellite base station supporting the corresponding TA. In this case, the paging message may be forwarded to the neighboring satellite base station via ISL.

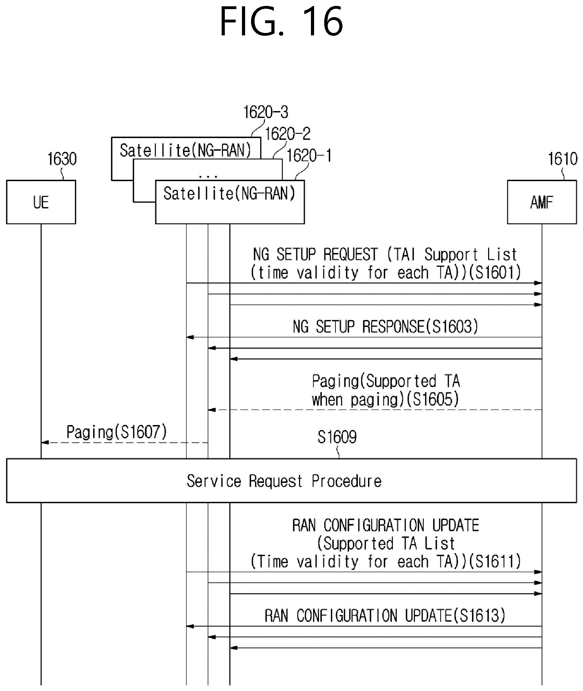

FIG. 16 illustrates an example of a paging procedure based on TA information according to an embodiment of the present disclosure.

Referring to FIG. 16, in step S1601, each of satellite base stations 1620-1 to 1620-3 transmits an NG SETUP REQUEST message to an AMF 1610. When connecting to the AMF, each of the satellite base stations 1620-1 to 1620-3 transmits an NG SETUP REQUEST message including TA information of the corresponding satellite base station to the AMF 1610. The NG SETUP REQUEST message may further include TA information of at least one neighboring satellite base station connected to the corresponding satellite base station among the satellite base stations 1620-1 to 1620-3. In this case, each of the TA information of the corresponding satellite base station and the TA information of the at least one neighboring satellite base station includes a supported TA list comprising a supported TA for a preconfigured time interval and time validity information for a TAC of the supported TA. In this case, the TA information of the at least one neighboring satellite base station may be obtained from the at least one neighboring satellite base station connected via ISL. For example, each of the satellite base stations 1620-1 to 1620-3 may obtain the TA information of the at least one neighboring satellite base station by performing the Xn setup procedure and/or the NG-RAN node configuration update procedure with the at least one neighboring satellite base station connected via ISL.

According to an embodiment, the NG SETUP REQUEST message may further include at least one of: whether and when an ISL with a neighboring satellite base station is used; identification information (e.g., global gNB-ID) of a neighboring satellite base station connected to the satellite base station; time information during which the satellite base station and the neighboring satellite base station are connectable via ISL; information on the AMF to which the neighboring satellite base station is connected; time information during which the neighboring satellite base station is directly connectable to the AMF; and time validity information for TAs supported by the neighboring satellite base station during the time when the neighboring satellite base station is not directly connected to the AMF. This is to enable the AMF to determine at least one of the connectivity relationship between satellite base stations via ISL and ISL usage time information of the satellite base stations.

In step S1603, the AMF 1610 transmits an NG SETUP RESPONSE message to each of the satellite base stations 1620-1 to 1620-3. In other words, when an NG SETUP REQUEST message is received from the satellite base stations 1620-1 to 1620-3, the AMF 1610 may transmit an NG SETUP RESPONSE message to each of the satellite base stations 1620-1 to 1620-3 in response. In addition, based on the NG SETUP REQUEST message received from each of the satellite base stations 1620-1 to 1620-3, the AMF 1610 may store the TA information of each of the satellite base stations 1620-1 to 1620-3 and the TA information of a satellite base station connectable via ISL.

In step S1605, the AMF 1610 attempts paging for a UE 1630 by transmitting a paging message to a satellite base station 1620-2. Specifically, when downlink data for the UE 1630 is detected, the AMF 1610 selects a satellite base station that currently supports the TA requiring paging, based on the TA information of each of the satellite base stations 1620-1 to 1620-3 and the TA information of at least one neighboring satellite base station of each of the satellite base stations 1620-1 to 1620-3 obtained through steps S1601 and S1603, and transmits a paging message to the selected base station.

In step S1607, the satellite base station 1620-2 transmits a paging message to the UE 1630. Here, the satellite base station 1620-2 receiving the paging message from the AMF 1610 checks whether the TA requiring paging is a TA currently supported by the satellite base station 1620-2 or a TA supported by a neighboring satellite base station connected to the satellite base station 1620-2 via ISL. When the TA requiring paging is a TA currently supported by the satellite base station 1620-2, the satellite base station 1620-2 transmits a paging message to the UE 1630 based on the paging assistance information included in the paging message. When the TA requiring paging is not a TA currently supported by the satellite base station 1620-2 but a TA supported by a neighboring satellite base station connected to the satellite base station 1620-2 via ISL, the satellite base station 1620-2 forwards the paging message to the neighboring satellite base station supporting the corresponding TA. In this case, the paging message may be transmitted to the UE 1630 by the neighboring satellite base station.

In step S1609, the UE 1630 transmits a service request signal to the AMF 1610, so that a UE triggered service request procedure may be performed. In this case, the UE triggered service request procedure may be performed as defined in clause 4.2.3.2 of TS 23.502.

In step S1611, each of the satellite base stations 1620-1 to 1620-3 transmits a RAN CONFIGURATION UPDATE message to the AMF 1610. The RAN CONFIGURATION UPDATE message includes TA information of the corresponding satellite base station and TA information of at least one neighboring satellite base station. The RAN CONFIGURATION UPDATE message may be transmitted when an update to the TA information transmitted from each of the satellite base stations 1620-1 to 1620-3 to the AMF 1610 is required. For example, each of the satellite base stations 1620-1 to 1620-3 may transmit a RAN CONFIGURATION UPDATE message to the AMF 1610 when a preconfigured time has elapsed, when a new TA supported by the satellite base station is added via O&M, when the satellite base station is connected via ISL to a new neighboring satellite base station, or when the connection with a neighboring satellite base station previously connected via ISL is released. The TA information of the satellite base station and the TA information of the at least one neighboring satellite base station included in the RAN CONFIGURATION UPDATE message may include TA information for a certain time interval starting from the time at which the RAN CONFIGURATION UPDATE message is transmitted.

In step S1613, the AMF 1610 transmits a RAN CONFIGURATION RESPONSE message to the satellite base stations 1620-1 to 1620-3. In other words, when a RAN CONFIGURATION UPDATE message is received from the satellite base stations 1620-1 to 1620-3, the AMF 1610 may transmit a RAN CONFIGURATION RESPONSE message to each of the satellite base stations 1620-1 to 1620-3 in response. In this case, the AMF 1610 updates the TA information by deleting the previously stored TA information of the satellite base station and the TA information of the at least one satellite base station, and storing the TA information of the satellite base station and the TA information of the at least one satellite base station included in the RAN CONFIGURATION UPDATE message.

### Method of provisioning TA information to a network node

TA information may be provisioned to a network node. In other words, satellite coverage availability information including at least one of orbit information of each satellite base station, information on a time interval during which each TA is covered by satellite base stations, and information on a satellite base station covering each TA may be provisioned to the network node. The information provisioned to the network node is not limited thereto. For example, various types of information required to obtain TA information of satellite base stations and connectivity information between satellite base stations may be provisioned to the network node. Accordingly, the network node may obtain TA information of all satellite base stations covering or supporting the area served by the network node, and through this, may obtain TA information of at least one satellite base station currently connected to the network node. Provisioning of TA information may be performed through operation and maintenance (O&M), or may be performed by receiving information from an AF or an NF.

When TA information is provisioned to the network node, the satellite base station may transmit orbit information of the satellite base station to the network node. For example, the satellite base station may transmit orbit information of the corresponding satellite base station to the network node using the NG setup procedure, the RAN configuration update procedure, or a new procedure.

When TA information is provisioned to the network node, the satellite base station does not transmit TA information of the satellite base station to the network node. For example, an NG SETUP REQUEST message or a RAN CONFIGURATION UPDATE message transmitted from the satellite base station to the network node does not include TA information of the satellite base station. However, the satellite base station may transmit a separate indication to the network node to instruct the network node to use the provisioned TA information. According to an embodiment, the satellite base station may transmit to the network node a TA list including all TAs supported by the satellite base station regardless of time. In this case, the TA list does not include time validity information of the TA.

The satellite base station may transmit connectivity information with a neighboring satellite base station to the network node. For example, when the satellite base station is connected to a neighboring satellite base station via ISL, the satellite base station may transmit to the AMF a connected base station list indicating neighboring satellite base stations currently connected to the satellite base station via ISL, using the NG SETUP REQUEST message or the RAN CONFIGURATION UPDATE message.

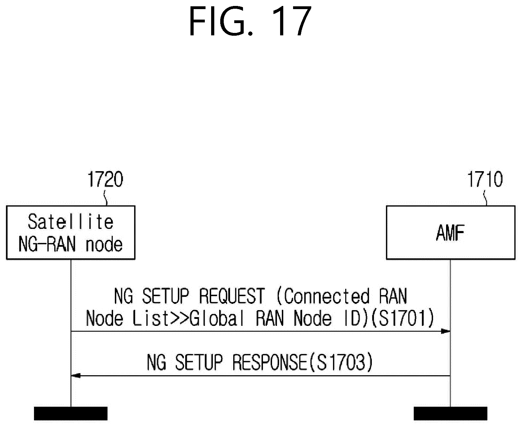

FIG. 17 illustrates an example of sharing satellite connectivity information according to an embodiment of the present disclosure.

Referring to FIG. 17, in step S1701, a satellite base station (satellite NG-RAN node) 1720 transmits an NG SETUP REQUEST message to an AMF 1710. The NG SETUP REQUEST message includes a connected RAN node list. The connected RAN node list may include identification information (e.g., Global RAN Node ID) of neighboring satellite base stations currently connected to the satellite base station. According to an embodiment, the NG SETUP REQUEST message may further include time information indicating when an ISL exists for each neighboring satellite base station. The time information indicating when an ISL exists for each neighboring satellite base station may indicate a time interval during which the satellite base station and the neighboring satellite base station are connectable via ISL.

In step S1703, the AMF 1710 transmits an NG SETUP RESPONSE message to the satellite base station 1720. The AMF 1710 may obtain and store at least one of the connected base station list and the time information indicating when an ISL exists for each neighboring satellite base station from the NG SETUP REQUEST message.

According to an embodiment, when the satellite base station is connected via ISL to a new neighboring satellite base station, or when an ISL with an existing neighboring satellite base station is released or terminated, the satellite base station may update the connected satellite base station list and provide the updated connected satellite base station list to the network node. In this case, the updated connected satellite base station list may be transmitted to the network node using a RAN CONFIGURATION UPDATE message.

As described above, by provisioning TA information to the network node and receiving connectivity information between the satellite base station and a neighboring satellite base station from the satellite base station, the network node can obtain TA information of all satellite base stations covering the area served by the network node. For example, even when a specific satellite base station is not directly connected to the network node through a terrestrial gateway but is connected via ISL to a satellite base station directly connected to the network node, the network node can obtain TA information of the specific satellite base station. That is, the network node can obtain time validity information of at least one TA of a satellite base station directly connected through a terrestrial gateway and time validity information of at least one TA of a satellite base station indirectly connected via ISL. In other words, based on the provisioned TA information, the network node can obtain information on satellite base stations supporting TAs within the area served by the network node and time validity information indicating when each satellite base station supports the corresponding TA.

Accordingly, the network node may select a satellite base station for paging a UE based on the provisioned TA information and the connectivity information between the satellite base station and a neighboring satellite base station. In other words, the network node may select a satellite base station for paging based on satellite base stations supporting TAs within the area served by the network node and time validity information indicating when each satellite base station supports the corresponding TA. The network node may transmit a paging message to the selected satellite base station. For example, the network node may transmit a paging message to the selected satellite base station as described in step S1605 of FIG. 16. In this case, the paging message may include identification information of the selected satellite base station.

Accordingly, the satellite base station receiving the paging message may transmit the paging message to the UE or forward the paging message to a neighboring satellite base station as described in step S1607. For example, when the identification information of the selected satellite base station included in the paging message is the same as the identification information of the satellite base station that received the paging message, the satellite base station that received the paging message may transmit the paging message to the UE. On the other hand, when the identification information of the selected satellite base station included in the paging message is different from the identification information of the satellite base station that received the paging message, the satellite base station that received the paging message may forward the paging message to the neighboring satellite base station having the corresponding identification information.

As described above, the TA information provisioned to the network node may be used not only for the paging operation but also for other operations. For example, the TA information provisioned to the network node may also be used to select a target network node for handover of a UE.

In the present disclosure, the network node can determine which satellite base station supports each TA and at which point in time, based on the TA information provisioned to the satellite base station or the network node. Accordingly, the network node may select a satellite base station for performing paging based on TA information when paging a UE. As a result, the satellite base station does not need to deliver information on a changed TA to the network node each time the served TA changes, thereby preventing unnecessary signaling from occurring and minimizing resource consumption.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a network node in a wireless communication system, the method comprising:
receiving a configuration request message from at least one base station;
transmitting a configuration response message to the at least one base station;
detecting downlink data for a user equipment; and
transmitting a message for paging the user equipment to a first base station among the at least one base station,
wherein the at least one base station is mounted on at least one satellite,
wherein the first base station is selected based on tracking area (TA) information of the at least one base station provisioned to the at least one base station or the network node, and
wherein the TA information of the at least one base station comprises at least one of a TA supported by the at least one base station and information indicating a time validity of the TA.

2. The method of claim 1, wherein the TA information of the at least one base station is determined based on orbit and coverage information of the at least one satellite provisioned to the at least one base station or the network node.

3. The method of claim 1, wherein the configuration request message comprises TA information provisioned to a base station that transmitted the configuration request message, and
wherein the TA information provisioned to the base station that transmitted the configuration request message comprises at least one of TA information of the base station that transmitted the configuration request message and TA information of at least one neighboring base station connected to the base station that transmitted the configuration request message.

4. The method of claim 3, further comprising receiving a configuration update message from the at least one base station,
wherein the configuration update message comprises updated TA information of the at least one base station.

5. The method of claim 4, wherein the configuration update message is received when a preconfigured time period has elapsed, when a new TA is added to the at least one base station, when the at least one base station is connected to a new neighboring base station, or when a connection between the at least one base station and at least one neighboring base station is released.

6. The method of claim 1, wherein the configuration request message comprises a connected base station list indicating identification information of neighboring base stations connected to a base station that transmitted the configuration request message, and
wherein the first base station is selected further based on the connected base station list.

7. The method of claim 6, further comprising receiving a configuration update message from the at least one base station,
wherein the configuration update message comprises a connected base station list indicating identification information of neighboring base stations connected to a base station that transmitted the configuration update message.

8. A method performed by a base station in a wireless communication system, the method comprising:
transmitting a configuration request message to a network node;
receiving a configuration response message from the network node; and
receiving a message for paging a user equipment,
wherein the base station is mounted on a satellite,
wherein the base station is selected as a base station for the paging based on TA information of at least one base station including the base station, provisioned to the at least one base station or the network node, and
wherein the TA information of the at least one base station comprises at least one of a TA supported by the at least one base station and information indicating a time validity of the TA.

9. The method of claim 8, further comprising:
transmitting TA information of the base station to a neighboring base station; and
receiving TA information of the neighboring base station from the neighboring base station,
wherein the configuration request message comprises the TA information of the base station and the TA information of the neighboring base station.

10. The method of claim 8, further comprising transmitting, to the network node, a configuration update message comprising updated TA information when a trigger event for updating TA information occurs,
wherein the trigger event for updating TA information comprises at least one of an event in which a preconfigured time period elapses, an event in which a new TA is added to the base station, an event in which a new neighboring base station is connected to the base station, or an event in which a connection between the base station and at least one neighboring base station is released.

11. The method of claim 10, wherein the configuration request message comprises a connected base station list indicating identification information of neighboring base stations connected to the base station, and
wherein the base station is selected as a base station for the paging further based on the connected base station list.

12. The method of claim 11, further comprising:
updating a connected base station list when a connection between the base station and at least one neighboring base station is released or when a new neighboring base station is connected to the base station; and
transmitting a configuration update message comprising the updated connected base station list to the network node.

13. A network node in a wireless communication system, the network node comprising:
a transceiver; and
a processor connected to the transceiver,
wherein the processor controls the network node to:
receive a configuration request message from at least one base station,
transmit a configuration response message to the at least one base station,
detect downlink data for a user equipment, and
transmit a message for paging the user equipment to a first base station among the at least one base station,
wherein the at least one base station is mounted on at least one satellite,
wherein the first base station is selected based on TA information of the at least one base station provisioned to the at least one base station or the network node, and
wherein the TA information of the at least one base station comprises at least one of a TA supported by the at least one base station and information indicating a time validity of the TA.

14. A base station in a wireless communication system, the base station comprising:
a transceiver; and
a processor connected to the transceiver,
wherein the processor controls the base station to:
transmit a configuration request message to a network node,
receive a configuration response message from the network node, and
receive a message for paging a user equipment,
wherein the base station is mounted on a satellite,
wherein the base station is selected as a base station for the paging based on TA information of at least one base station including the base station, provisioned to the at least one base station or the network node, and
wherein the TA information of the at least one base station comprises at least one of a TA supported by the at least one base station and information indicating a time validity of the TA.

15. A communication apparatus comprising:
at least one processor; and
at least one computer memory connected to the at least one processor and storing instructions that, when executed by the at least one processor, direct operations,
wherein the operations comprise:
receiving a configuration request message from at least one base station;
transmitting a configuration response message to the at least one base station;
detecting downlink data for a user equipment; and
transmitting a message for paging the user equipment to a first base station among the at least one base station, wherein the at least one base station is mounted on at least one satellite,
wherein the first base station is selected based on tracking area (TA) information of the at least one base station provisioned to the at least one base station or the network node, and
wherein the TA information of the at least one base station comprises at least one of a TA supported by the at least one base station and information indicating a time validity of the TA.

16. A non-transitory computer-readable medium storing at least one instruction,
wherein the at least one instruction is executable by a processor, and
wherein the at least one instruction controls an apparatus to:
receive a configuration request message from at least one base station,
transmit a configuration response message to the at least one base station,
detect downlink data for a user equipment,
transmit a message for paging the user equipment to a first base station among the at least one base station,
wherein the at least one base station is mounted on at least one satellite,
wherein the first base station is selected based on TA information of the at least one base station provisioned to the at least one base station or the network node, and
wherein the TA information of the at least one base station comprises at least one of a TA supported by the at least one base station and information indicating a time validity of the TA.
